# EUROPEAN PATENT SPECIFICATION

(11) **EP 2 192 031 B1**
(45) Date of publication and mention of the grant of the patent: **06.08.2014**
(21) Application number: 08866512.0
(22) Date of filing: 19.09.2008
(51) Int. Cl.: B62J 6/04, B60Q 1/56

(54) **Motorcycle**
Motorrad
Motocyclette

(30) Priority: 28.12.2007 JP 2007340097
(43) Date of publication of application: 02.06.2010
(73) Proprietor: Honda Motor Co., Ltd., Minato-ku Tokyo 107-8556 (JP)
(72) Inventor: YOSHIMURA, Yuki, Saitama 351-0193 (JP); NISHIMOTO, Akihiko, Saitama 351-0193 (JP)
(74) Representative: Beder, Jens
(86) International application number: PCT/JP2008/067042
(87) International publication number: WO 2009/084289

(56) References cited:
- EP-A1- 1 785 341
- WO-A1-03/035457
- JP-A- 10 040 716
- JP-A- 10 166 937
- JP-A- 2002 087 350
- JP-A- 2007 030 526
- JP-U- 57 090 504
- JP-U- 57 090 504
- JP-U- 63 159 390

## Description

### Technical Field:

The present invention relates to a motorcycle and, more particularly, to surroundings of a taillight device of a motorcycle.

### Background Art:

As a conventional motorcycle, a structure has been disclosed, which is provided with a license plate irradiating lens formed of, e.g., a synthetic resin lens under a main lens of a taillight device to illuminate a license plate disposed on a rear end portion of the vehicle with light passing through the license plate irradiating lens from a light source (see, e.g., patent document 1).

Patent Document 1: JP-A-10-166937

Meanwhile, the motorcycle described in the above patent document 1 is provided with the license plate irradiating lens formed of a transparent plate, which is arranged continuously from the bottom surface of the taillight lens of the taillight device extending slantingly rearwardly and upwardly. Thus, light passing through the license plate irradiating lens is seen from the rear of the vehicle. Consequently, there has been necessity for providing a vehicle body cover on a lower portion of the taillight device in order to shield this light. In addition, because the license plate irradiating lens is constructed by a flat plate, the degree of flexibility in designing the device is limited.

A motorcycle, in which all features of the preamble of claim 1 are disclosed, is described in JP 10 040716 A.

A tail lamp unit mounted to a rear portion of a motorcycle, in which a transparent white license plate lamp lens is arranged below a tail lamp bulb and serves to illuminate a license plate installed in the rear fender, is known from EP 1 785 341 A1.

Further, there is known from JP 57 090504 U a tail lamp unit in which a transparent plate is formed on a bottom surface of the tail lamp unit so as to be set back upwardly therein so that light passing though the transparent plate can be prevented from being seen from the rear of the vehicle

### Summary of Invention:

It is an object of the present invention to provide a motorcycle which prevents, without providing a vehicle body cover on a lower portion of a taillight device, light passing through a license plate irradiating lens from being seen from the rear of the vehicle while increasing the degree of flexibility in designing the taillight device.

This object is achieved by a motorcycle according to the enclosed independent claim 1. Advantageous features of the present invention are defined in the corresponding subclaims.

According to a first aspect of the invention, in a motorcycle including a rear cowl configured to cover a rear portion of a vehicle body, a taillight device disposed at a rear end portion of the rear cowl and including a main lens in a rear side thereof, a rear fender configured to cover an upper portion of a rear wheel and a license plate provided on the rear fender, the taillight device includes a license plate irradiating port provided in the main lens and configured to lead light from a light source onto the license plate, and a license plate irradiating lens disposed in the license plate irradiating port, wherein a concave portion, with the license plate irradiating port formed in a top surface of the concave portion, is formed on a bottom surface of the main lens so as to be set back upwardly therein so that the license plate irradiating lens is disposed at an inner side of the concave portion and light passing though the license plate irradiating lens can be prevented from being seen from the rear of the vehicle wherein the concave portion is formed so that a front part thereof is set back more upwardly than a rear part thereof and the concave portion has a front wall inclined rearwardly and upwardly.

According to a second aspect of the invention, in the motorcycle according to the first aspect of the invention, the license plate irradiating lens is formed in a shape in rear view thereof, which substantially coincides with the shape of a circular arc surface of a bottom edge portion of a rear surface of the main lens and is disposed to be accommodated in a region of the circular arc surface.

According to a third aspect of the invention, in the motorcycle according to the first or second aspect of the invention, a front end edge of the concave portion is disposed in the vicinity of an opening edge of the rear cowl.

According to a fourth aspect of the invention, in the motorcycle according to one of the first to third aspects of the invention, a folded-back portion of a reflector of the taillight device is disposed so as to be superposed on the vicinity of a front end portion of the license plate irradiating port.

According to a fifth aspect of the invention, in the motorcycle according to one of the first to fourth aspects of the invention, the license plate irradiating lens is formed into a multi-faceted shape or a curved-surface shape.

According to a sixth aspect of the invention, in the motorcycle according to one of the first to fifth aspects of the invention, the main lens has a shape formed to resemble the shape of a muffler and is formed substantially like a cylinder so that the bottom surface of the main lens bulges out rearwardly of the rear cowl.

In accordance with the motorcycle according to the first aspect of the invention, the taillight device includes a license plate irradiating port provided in the main lens, which is configured to lead light from a light source onto the license plate, and a license plate irradiating lens disposed in the license plate irradiating port. A concave portion is formed on the bottom surface of the main lens so as to be set back upwardly therein and as to have a front wall inclined rearwardly and upwardly. Accordingly, the license plate irradiating lens is disposed at the inner side of the concave portion. Thus, no vehicle body cover is provided on a lower portion of the taillight device. In addition, light passing through a license plate irradiating lens can be prevented from being seen from the rear of the vehicle. Further, the front wall of the concave portion is inclined upwardly. Thus, a range, in which light is irradiated from the license plate irradiating lens, can be frontwardly expanded. Consequently, the license plate can be disposed at a frontward position. Thus, a rear end portion of the rear fender can be disposed at a frontward place.

In accordance with the motorcycle according to the second aspect of the invention, the license plate irradiating lens is formed in a shape in rear view thereof, which substantially coincides with the shape of a circular arc surface of a bottom edge portion of a rear surface of the main lens and is disposed to be accommodated in a region of the circular arc surface. Thus, the license plate irradiating lens can be prevented from being seen through the rear surface of the main lens. In addition, irradiated light can be floodlighted in the lateral direction of the vehicle along the direction of the circular arc. Consequently, the range of irradiation of light can be expanded in a width direction. Accordingly, the license plate can effectively be irradiated.

In accordance with the motorcycle according to the third aspect of the invention, a front end edge of the concave portion is disposed in the vicinity of an opening edge of the rear cowl. Thus, the front end edge of the concave portion substantially coincides with the opening edge of the rear cowl in rear view of the vehicle. Consequently, the front end edge of the concave portion can be obscured. Accordingly, the appearance of the motorcycle can be improved.

In accordance with the motorcycle according to the fourth aspect of the invention, a folded-back portion of a reflector of the taillight device is disposed so as to be superposed on the vicinity of a front end portion of the license plate irradiating port. Thus, no light is transmitted frontwardly from the front end portion of the license plate irradiating port. Consequently, transmitted light is not refracted at the front end edge of the concave portion. Accordingly, the front end edge of the concave portion can be obscured.

In accordance with the motorcycle according to the fifth aspect of the invention, the license plate irradiating lens is formed into a multi-faceted shape or a curved-surface shape. Thus, the license plate irradiating lens can be formed by being shaped according to the shape of the taillight device. Consequently, the degree of flexibility in designing the taillight device can be enhanced.

In accordance with the motorcycle according to the sixth aspect of the invention, the main lens has a shape formed to resemble the shape of a muffler and is formed substantially like a cylinder so that the bottom surface of the main lens bulges out rearwardly of the rear cowl. Thus, the sporty appearance of the taillight device can be obtained by forming the main lens to have a shape formed to resemble the shape of a muffler. In addition, the concave portion can easily be formed in the main lens.

Other aspects and advantages of the invention will be apparent from the following description, the drawings and the claims.

### Brief Description of Drawings:

[FIG. 1] FIG. 1 is a left side view illustrating an embodiment of a motorcycle according to the invention.
[FIG. 2] FIG. 2 is an enlarged view illustrating a rear cowl, a rear fender, and surroundings of a taillight device illustrated in FIG. 1.
[FIG. 3] FIG. 3 is a view, taken from the rear of the taillight device, illustrating the rear cowl, the rear fender, and the surroundings of a taillight device illustrated in FIG. 1.
[FIG. 4] FIG. 4 is an enlarged side view illustrating the surrounding of the taillight device illustrated in FIG. 2.
[FIG. 5] FIG. 5 is a cross-sectional view taken in the direction of arrows A-A illustrated in FIG. 3.
[FIG. 6] FIG. 6 is a view illustrating the taillight device, which is taken from rear.
[FIG. 7] FIG. 7 is a view taken illustrating the taillight device, which is taken from rear and from below.

### DESCRIPTION OF REFERENCE NUMERALS AND SIGNS

- 10: motorcycle
- WF: front wheel
- WR: rear wheel
- 21: rear cowl
- 21a: opening edge
- 22: rear fender
- 23: license plate
- 50: taillight device
- 51: case
- 52: main lens
- 53: illumination device (light source)
- 53a: socket
- 53b: connector
- 53c: stop lightbulb
- 54: concave portion
- 54a: front wall
- 54b: front end edge
- 55: license plate irradiating port
- 56: license plate irradiating lens
- 57: circular arc surface (circular arc shape)
- 58: reflector
- 58a: folded-back portion
- X: a region of the circular arc surface

### Description of Embodiments:

Hereinafter, an embodiment of the motorcycle according to the invention is described in detail with reference to the accompanying drawings. Incidentally, it is assumed that the drawings are referred to by employing viewing directions as designated by reference characters, i.e., by setting front, rear, left, right, upward, and downward viewing directions as designated by the following reference characters Fr, Rr, L, R, U, and D, respectively, according to directions viewed by a driver, in the following description.

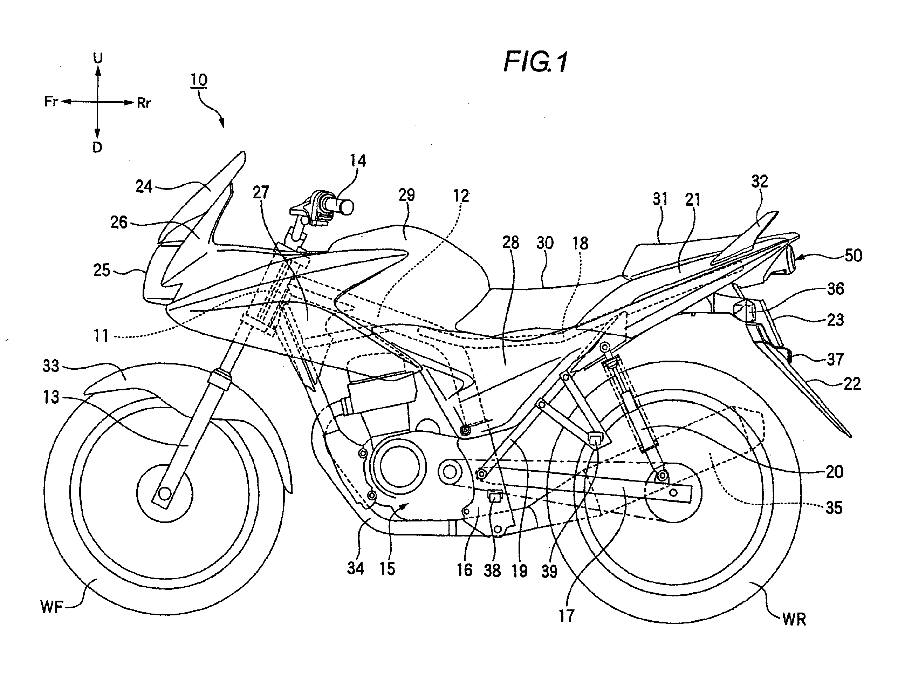

As illustrated in FIG. 1, a motorcycle 10 according to the present embodiment includes a pair of left and right main frames 12 extending rearwardly and downwardly from a head pipe 11, a front fork 13 turnably supported by the head pipe 11, a front wheel WF rotatably supported at the bottom end portion of the front fork 13, a steering handle 14 attached to the top end portion of the front fork 13, an engine 15 mounted below the main frame 12, a pivot plate 16 connected to a rear end portion of the main frame 12, a swing arm 17 swingably supported on a pivot plate 16, a rear wheel WR rotatably supported at a rear end portion of the swing arm 17, a seat frame 18 connected to an upper rear portion of the main frame 12 so as to extend rearwardly and upwardly, a rear subframe 19 connected to the pivot plate 16 so as to extend rearwardly and upwardly, whose rear end portion is joined to the seat frame 18, and a cushion unit 20 configured to rockably connect the rear subframe 19 and the swing arm 17 to each other.

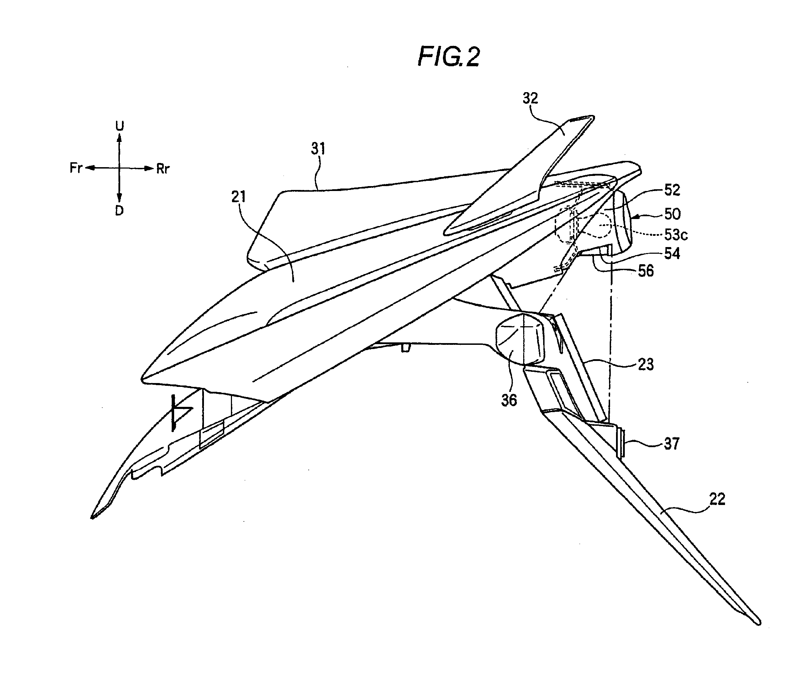

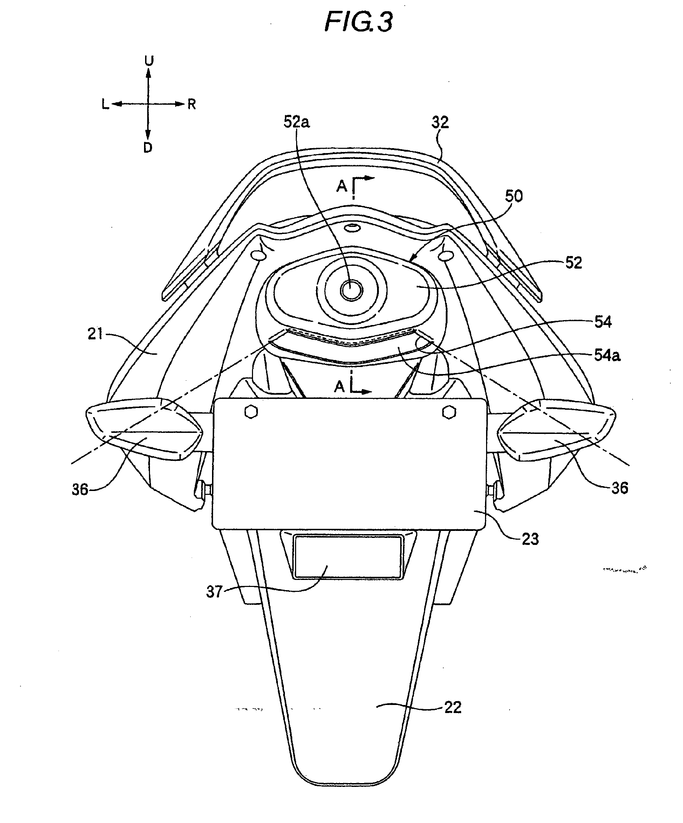

As illustrated in FIGS. 2 and 3, the motorcycle 10 includes a rear cowl 21 configured to cover a rear portion of a vehicle body, a taillight device 50 provided at a rear end portion of the rear cowl 21, a rear fender 22 configured to cover over the rear wheel WR, and a license plate 23 provided on the rear fender 22.

Incidentally, in FIG. 1, reference numeral 24 designates a wind screen, reference numeral 25 denotes a headlight, reference numeral 26 represents a front cowl, reference numeral 27 designates a front-side cowl, reference numeral 28 denotes a side cowl, reference numeral 29 represents a fuel tank, reference numeral 30 designates a driver seat, reference numeral 31 denotes a co-rider seat, reference numeral 32 represents a grab rail, reference numeral 33 designates a front fender, reference numeral 34 denotes an exhaust pipe, reference numeral 35 represents a muffler, reference numeral 36 designates a rear winker, reference numeral 37 represents a reflector, reference numeral 38 designates a main step, and reference numeral 39 denotes a pillion step.

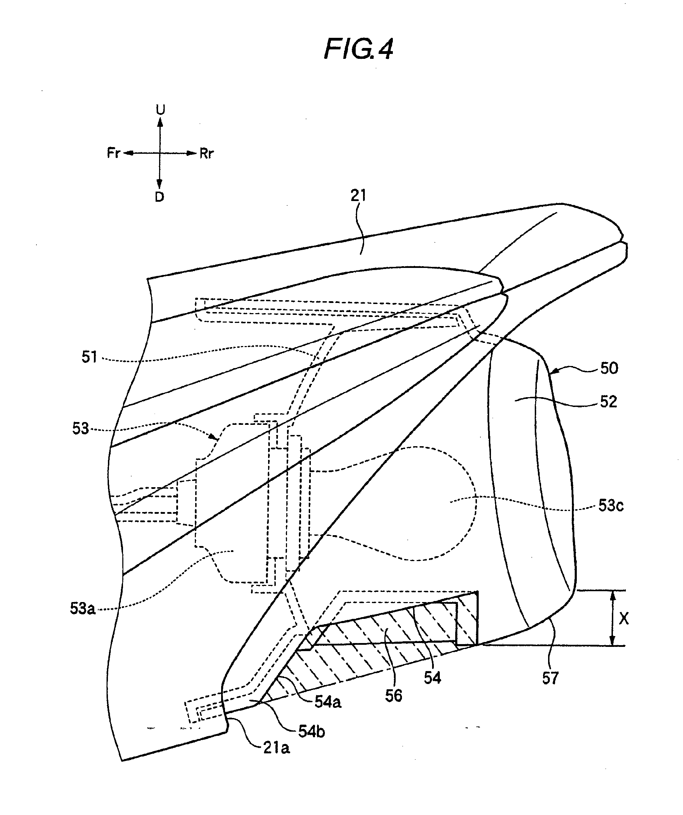

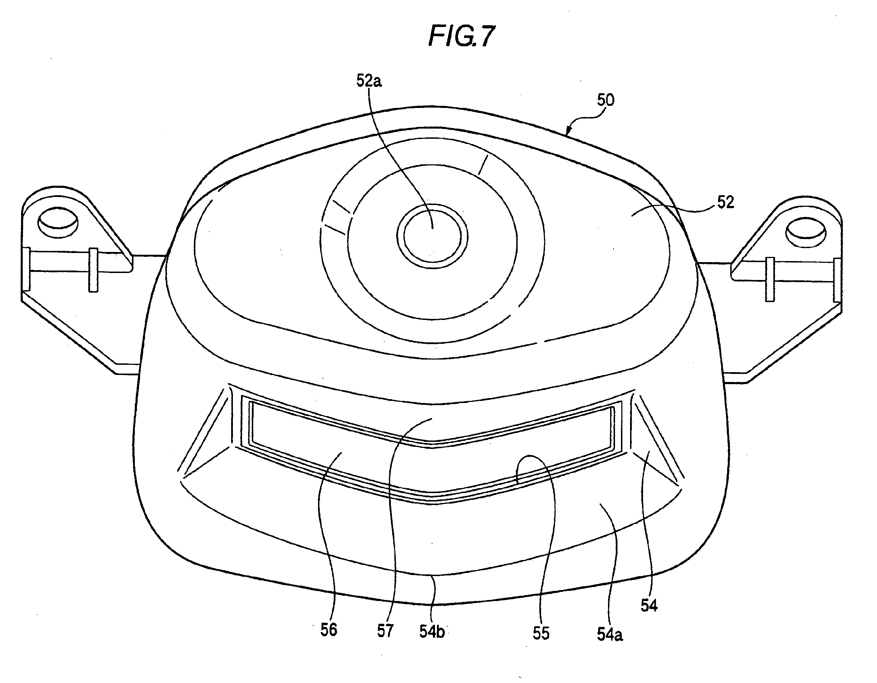

As illustrated in FIGS. 4 to 7, the taillight device 50 includes mainly a case 51 fixed to a vehicle side, a main lens 52 whose front opening is blocked up by the case 51, an illumination device (light source) 53 attached to the case 51, a concave portion 54 formed on the bottom surface of the main lens 52 so as to be set back upwardly therein, a license plate irradiating port 55 formed in the top surface of the concave portion 54 so as to lead light from the illumination device 53 onto the license plate 23, and the license plate irradiating lens 56 mounted in the license plate irradiating port 55.

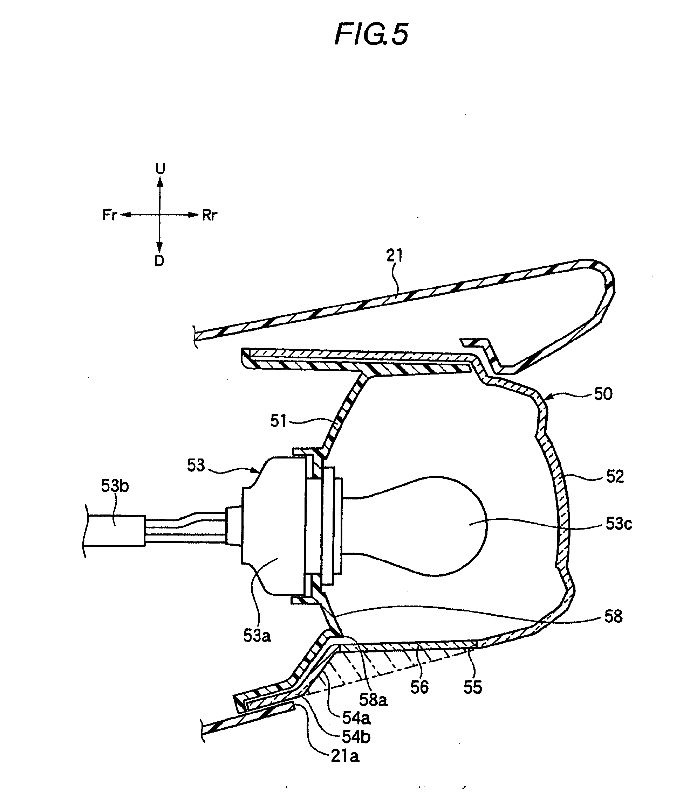

As illustrated in FIG. 5, the illumination device 53 includes a socket 53a fit into the case 51, a connector 53b configured to extend frontwardly from the socket 53a and to be electrically connected to a lighting device control unit (not shown) mounted in the vehicle, and a stop light bulb 53c attached to the socket 53a. Incidentally, alternate long and short dash lines illustrated in FIGS. 2 and 3 represent illumination light rays of the stop light bulb 53c.

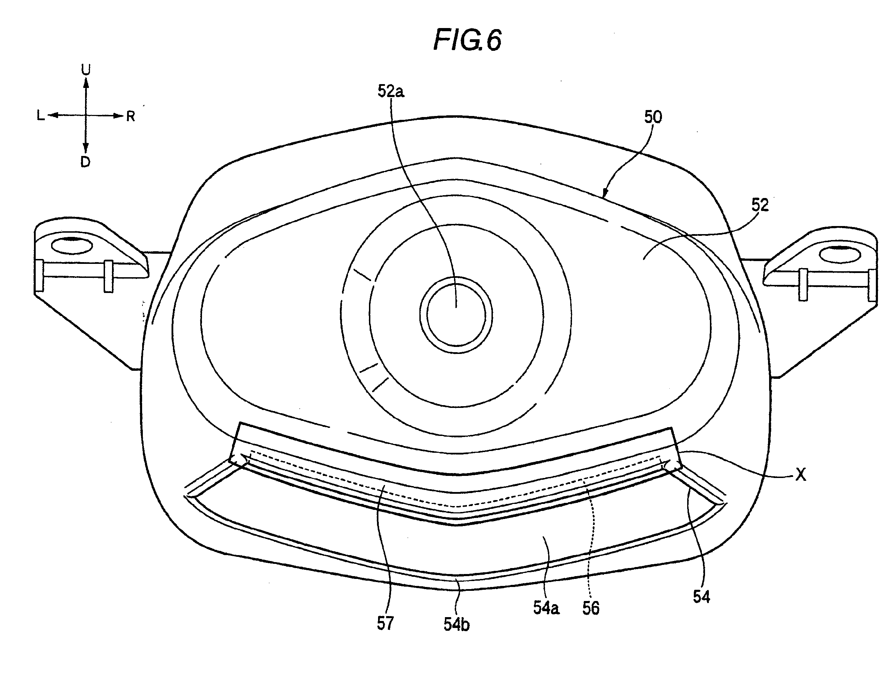

According to the present embodiment, as illustrated in FIGS. 4 and 6, the license plate irradiating lens 56 is formed in a shape in rear view thereof, which substantially coincides with the shape of a circular arc surface 57 of the bottom edge portion of the rear surface of the main lens 52 and is disposed so as to be accommodated in a region X of the circular arc surface 57.

According to the present embodiment, a front wall 54a of the concave portion 54 is formed so as to be inclined rearwardly and upwardly, as illustrated in FIG. 4. The concave portion 54 is formed so that a front part thereof is set back more upwardly than a rear part thereof, as viewed in FIG. 4. Incidentally, a portion hatched by alternate long and short dash lines illustrated in FIG. 4 and FIG. 5 represents the range of the concave portion 54.

According to the present embodiment, as illustrated in FIGS. 4 and 5, a front end edge 54b of the concave portion 54 is disposed in the vicinity of an opening edge 21a of the rear cowl 21.

According to the present embodiment, as illustrated in FIG. 5, a reflector 58 is formed on the inner surface of the case 51 of the taillight device 50. A folded-back portion 58a in a lower part of the reflector 58 is disposed to be superposed on the vicinity of the front end portion of the license plate irradiating port 55 in an up-down direction.

According to the present embodiment, as illustrated in FIGS. 5 to 7, the license plate irradiating lens 56 is formed of a synthetic resin transparent plate to be cross-sectionally smoothly curvilinear-shaped by forming a plurality of curved surfaces so as to be continuous with one another. Incidentally, the license plate irradiating lens 56 can be formed into a multi-faceted shape by forming a plurality of flat surfaces each of which forms a plurality of angles with surrounding ones of the plurality of flat surfaces, respectively.

According to the present embodiment, as illustrated in FIGS. 3 and 6, the main lens 52 has a shape formed to resemble the shape of a muffler and is formed into a cylindrical shape so that the bottom surface of the main lens 52 bulges out rearwardly of the rear cowl 21. Incidentally, the shape formed to resemble the shape of the muffler is such that the shape of the outer circumference of the main lens 52 resembles the outer shape of the muffler, and that the shape of a circular object 52a provided on the center of a rear surface of the main lens 52 resembles the shape of an outlet port of the muffler.

As described above, according to the motorcycle 10 of the present embodiment, the taillight device 50 is configured such that the main lens 52 is provided with the license plate irradiating port 55 configured to lead light from the illumination device 53 onto the license plate 23 and with the license plate irradiating lens 56 disposed in the license plate irradiating port 55, and that the concave portion 54 constituting the license plate irradiating port 55 is formed in the bottom surface of the main lens 52 so as to be set back therein upwardly and so that the front wall 54a is inclined rearwardly and upwardly.
Thus, the license plate irradiating lens 56 is disposed at the inner side of the concave portion 54. Consequently, light passing through the license plate irradiating lens 56 can be prevented from being seen from the rear of the vehicle, without providing the vehicle body cover on a lower portion of the taillight device 50. In addition, because the front wall 54a of the concave portion 54 is inclined rearwardly and upwardly, the range of irradiation of light from the license plate irradiating lens 56 can be expanded frontwardly. Consequently, the license plate 23 can be disposed at a frontward position.
Thus, the rear end portion of the rear fender 22 can be disposed at a frontward place.

According to the motorcycle 10 of the present embodiment, the license plate irradiating lens 56 is formed in a shape in rear view thereof, which substantially coincides with the shape of a circular arc surface 57 of the bottom edge portion of the rear surface of the main lens 52 and is disposed so as to be accommodated in a region X of the circular arc surface 57. Thus, the license plate irradiating lens 56 can be prevented from being seen through the rear surface of the main lens 52.
In addition, irradiated light can be floodlighted in the lateral direction of the vehicle along the direction of the circular arc. Consequently, the range of irradiation of light can be expanded in a width direction. Accordingly, the license plate 23 can effectively be irradiated.

According to the motorcycle 10 of the present embodiment, the front end edge 54b of the concave portion 54 is disposed in the vicinity of the opening edge 21a of the rear cowl 21. Thus, the front end edge 54a of the concave portion 54 substantially coincides with the opening edge 21a of the rear cowl 21 in rear view of the vehicle. Consequently, the front end edge 54b of the concave portion 54 can be obscured. Accordingly, the appearance of the motorcycle 10 can be improved.

According to the motorcycle 10 of the present embodiment, the folded-back portion 58a of the reflector 58 of the taillight device 50 is disposed so as to be superposed on the vicinity of the front end portion of the license plate irradiating port 55. Thus, no light is transmitted frontwardly from the front end portion of the license plate irradiating port 55. Consequently, the front end edge54b of the concave portion 54 can be prevented from being clearly viewed due to the refraction of transmitted light at the front end edge 54b of the concave portion 54. Accordingly, the appearance of the motorcycle 10 can be improved.

According to the motorcycle 10 of the present embodiment, the license plate irradiating lens 56 is formed into a multi-faceted shape or a curved-surface shape. Thus, the license plate irradiating lens 56 can be formed by being shaped according to the shape of the taillight device 50. Consequently, the degree of flexibility in designing the taillight device 50 can be enhanced.

According to the motorcycle 10 of the present embodiment, the main lens 52 has a shape formed to resemble the shape of a muffler and is formed substantially like a cylinder so that the bottom surface of the main lens 52 bulges out rearwardly of the rear cowl 21. Thus, the sporty appearance of the taillight device can be obtained by forming the main lens 52 to have a shape formed to resemble the shape of a muffler. In addition, the concave portion 54 can easily be formed in the main lens 52.

While the invention has been described in detail with reference to specific embodiments thereof, it is apparent to those skilled in the art that various changes and modifications can be made without departing from the scope of the invention as defined in the appended claims.

### Industrial Applicability:

The invention can be applied to a motorcycle having a taillight device and a license plate.

## Claims

1. A motorcycle comprising:
a rear cowl (21) configured to cover a rear portion of a vehicle body;
a taillight device (50) disposed at a rear end portion of the rear cowl (21) and including a main lens (52) in a rear side thereof;
a rear fender (22) configured to cover an upper portion of a rear wheel (WR); and
a license plate (23) provided on the rear fender (22),
wherein the taillight device (50) includes:
a license plate irradiating port (55) provided in the main lens (52) and configured to lead light from a light source (53) onto the license plate (23); and
a license plate irradiating lens (56) disposed in the license plate irradiating port (55), wherein
a concave portion (54), with the license plate irradiating port (55) formed in a top surface of the concave portion (54), is formed on a bottom surface of the main lens (52) so as to be set back upwardly therein so that the license plate irradiating lens (56) is disposed at an inner side of the concave portion (54) and light passing though the license plate irradiating lens (56) can be prevented from being seen from the rear of the vehicle **characterized in that** the concave portion (54) is formed so that a front part thereof is set back more upwardly than a rear part thereof and the concave portion (54) has a front wall (54a) inclined rearwardly and upwardly.

2. The motorcycle according to claim 1, wherein the license plate irradiating lens (56) is formed in a shape in rear view thereof, which substantially coincides with the shape of a circular arc surface (57) of a bottom edge portion of a rear surface of the main lens (52) and is disposed to be accommodated in a region (X) of the circular arc surface (57).

3. The motorcycle according to claim 1 or 2, wherein a front end edge (54b) of the concave portion (54) is positioned in a vicinity of an opening edge (21a) of the rear cowl (21).

4. The motorcycle according to one of claims 1 to 3, wherein a folded-back portion (58a) of a reflector (58) of the taillight device (50) is disposed so as to be superposed on a vicinity of a front end portion of the license plate irradiating port (55).

5. The motorcycle according to one of claims 1 to 4, wherein the license plate irradiating lens (56) is formed into a multi-faceted shape or a curved-surface shape.

6. The motorcycle according to one of claims 1 to 5, wherein the main lens (52) has a shape formed to resemble a shape of a muffler and is formed substantially like a cylinder so that the bottom surface of the main lens (52) bulges out rearwardly of the rear cowl (21).

## Patentansprüche

1. Motorrad aufweisend:
eine hintere Verkleidung (21), die eingerichtet ist, um eine hinteren Abschnitt eines Fahrzeugrahmens abzudecken;
eine Rücklichtvorrichtung (50), die an einem hinterem Endabschnitt der hinteren Verkleidung (21) angeordnet ist, und die eine Hauptlinse (52) an ihrer hinteren Seite umfasst;
ein hinterer Kotflügel (22), der eingerichtet ist, um einen oberen Abschnitt eines Hinterrads (WR) abzudecken; und
ein Nummernschild (23), das an dem hinteren Kotflügel (22) vorgesehen ist,
wobei die Rücklichtvorrichtung (50) umfasst:
eine Nummernschildbeleuchtungsöffnung (55), die in der Hauptlinse (52) vorgesehen ist und die eingerichtet ist, um Licht von einer Lichtquelle (53) auf das Nummernschild (23) zu leiten; und
eine Nummernschildbeleuchtungslinse (56), die in der Nummernschildbeleuchtungsöffnung (55) angeordnet ist,
wobei ein konkaver Abschnitt (54), mit der Nummernschildbeleuchtungsöffnung (55) in dem konkaven Abschnitt geformt, an einer unteren Fläche der Hauptlinse (52) so geformt ist, dass er darin nach hinten versetzt ist, so dass die Nummernschildbeleuchtungslinse (56) an einer inneren Seite des konkaven Abschnitts (54) angeordnet ist und Licht, das durch die Nummernschildbeleuchtungslinse (56) tritt, abgehalten werden kann, von hinter dem Fahrzeug gesehen zu werden,
**dadurch gekennzeichnet, dass**
der konkave Abschnitt (54) so geformt ist, dass ein vorderer Teil davon weiter nach oben zurückversetzt ist als ein hinterer Teil davon und der konkave Abschnitt (54) eine Vorderwand (54a) hat, die nach hinten und aufwärts geneigt ist.

2. Motorrad gemäß Anspruch 1, wobei die Nummernschildbeleuchtungslinse (56) in einer rückwärtigen Ansicht in einer Form geformt ist, die im wesentlichen mit der Form einer kreisförmig gebogenen Oberfläche (57) eines unteren Kantenabschnitts der hinteren - Oberfläche der Hauptlinse (52) übereinstimmt und so angeordnet ist, dass sie in einem Bereich (X) der kreisförmig gebogenen Oberfläche (57) angeordnet ist.

3. Motorrad gemäß Anspruch 1 oder 2, wobei ein Vorderseitenrand (54b) des konkaven Abschnitts (54) in der Nähe eines Öffnungsrands (21a) der hinteren Verkleidung (21) angeordnet ist.

4. Motorrad gemäß einem der Ansprüche 1 bis 3, wobei ein zurückgeklappter Abschnitt (58a) eines Reflektors (58) der Rücklichtvorrichtung (50) so angeordnet ist, dass er einen Bereich eines Frontendabschnitts der Nummernschildbeleuchtungsöffnung (55) überdeckt.

5. Motorrad gemäß einem der Ansprüche 1 bis 4, wobei die Nummernschildbeleuchtungslinse (56) in einer Mehrfach-Facetten-Form oder in einer Form mit gekrümmter Oberfläche geformt ist.

6. Motorrad gemäß einem der Ansprüche 1 bis 5, wobei die Hauptlinse (52) in einer Form geformt ist, die an eine Form eines Auspuffs erinnert und die im wesentlichen wie ein Zylinder geformt ist, so dass sich die untere Oberfläche der Hauptlinse (52) von der hinteren Verkleidung (21) nach hinten auswölbt.

## Revendications

1. Motocycle comprenant :
un capot arrière (21) configuré pour recouvrir une portion arrière d'un corps de véhicule ;
un dispositif de feu arrière (50) disposé à une portion d'extrémité arrière du capot arrière (21) et comprenant une lentille principale (52) dans un côté arrière de celui-ci ;
un pare-chocs arrière (22) configuré pour recouvrir une portion supérieure d'une roue arrière (RA) ; et
une plaque d'immatriculation (23) prévue sur le pare-chocs arrière (22),
dans lequel le dispositif de feu arrière (50) comprend :
un orifice éclairant la plaque d'immatriculation (55) prévu dans la lentille principale (52) et configuré pour guider la lumière d'une source lumineuse (53) sur la plaque d'immatriculation (23) ; et
une lentille éclairant la plaque d'immatriculation (56) disposée dans l'orifice éclairant la plaque d'immatriculation (55),
dans lequel
une portion concave (54), avec l'orifice éclairant la plaque d'immatriculation (55) formé dans une surface supérieure de la portion concave (54), est formée sur une surface inférieure de la lentille principale (52) de manière à être placée en retrait vers le haut à l'intérieur de sorte que la lentille éclairant la plaque d'immatriculation (56) est disposée sur un côté interne de la portion concave (54) et la lumière passant à travers la lentille éclairant la plaque d'immatriculation (56) peut ne pas pouvoir être vue de l'arrière du véhicule, **caractérisé en ce que** la portion concave (54) est formée de sorte qu'une partie avant de celle-ci est placée en retrait davantage vers le haut qu'une portion arrière de celle-ci et la portion concave (54) a une paroi avant (54a) inclinée vers l'arrière et vers le haut.

2. Motocycle selon la revendication 1, dans lequel la lentille éclairant la plaque d'immatriculation (56) est réalisée dans une forme en vue arrière de celle-ci, qui coïncide sensiblement avec la forme d'une surface en arc circulaire (57) d'une portion formant bordure inférieure d'une surface arrière de la lentille principale (52) et est disposée pour être logée dans une zone (X) de la surface en arc circulaire (57) .

3. Motocycle selon la revendication 1 ou 2, dans lequel une bordure d'extrémité avant (54b) de la portion concave (54) est positionnée à proximité d'une bordure d'ouverture (21a) du capot arrière (21).

4. Motocycle selon l'une des revendications 1 à 3, dans lequel une portion rabattue (58a) d'un réflecteur (58) du dispositif de feu arrière (50) est disposée de manière à être superposée à proximité d'une portion d'extrémité avant de l'orifice éclairant la plaque d'immatriculation (55).

5. Motocycle selon l'une des revendications 1 à 4, dans lequel la lentille éclairant la plaque d'immatriculation (56) est réalisée dans une forme à plusieurs facettes ou une forme à surface incurvée.

6. Motocycle selon l'une des revendications 1 à 5, dans lequel la lentille principale (52) a une forme réalisée pour ressembler à une forme d'un pot d'échappement et est formée sensiblement comme un cylindre de sorte que la surface inférieure de la lentille principale (52) est bombée vers l'arrière du capot arrière (21).
